# EUROPEAN PATENT APPLICATION

(11) **EP 1 741 541 A2**
(43) Date of publication of application: **10.01.2007**
(21) Application number: 06013805.4
(22) Date of filing: 04.07.2006
(51) Int. Cl.: B29C 47/10, B29C 47/76

(54) **Methods and systems for making long fiber reinforced products and resultant products**

(30) Priority: 05.07.2005 US 174758
(71) Applicant: Johns Manville International, Inc., Denver, Colorado 80202 (US)
(72) Inventor: Gleich, Klaus Friedrich, Highlands Ranch CO 80126 (US); Derengowski, Thomas, Charlevoix MI 49720 (US); Armstrong, Dale, Bloomfield Hills MI 48304 (US); Hilborn, Thomas, Broomfield Hills MI 48304 (US)
(74) Representative: Luderschmidt, Schüler & Partner

(57) **Abstract**

Systems and methods are disclosed for making a moldable polymer mixture containing long reinforcing fibers that suffered no significant damage during plastication. The system and method produces a mixture in which the long fibers are longer and have encountered less damage than moldable mixtures made in previous plasticators. The plasticator system has a single screw, but with multiple zones (4,6,10,12,14,16,22,23) for treating the materials differently. The long fibers, wet or dry, are fed into a downstream zone (12), distributed over a large port in a low density concentration, and heated and dispersed with low shear to separate the long fibers and surround them with polymer for protection before subjecting them to medium to high shear to finalize the dispersion of the long fibers.

## Description

This invention includes a system and method for making fiber reinforced polymer (FRP) products, particularly long fiber reinforced products and to the intermediate fiber reinforced moldable mixtures produced. The processes and systems are useful in making long fiber reinforced polymer (LFRP) products having one or more of lower cost, better fiber dispersion, improved appearance, fewer defects, particularly surface defects, better uniformity including surface uniformity, and better physical properties.

Chopped strand reinforced products such as chopped strand for thermoplastics, usually comprising many glass fibers but also carbon, ceramic or polymer fibers, alone or in combination, are typically made from pellets, or other form, of one or a mixture of polymers having dispersed fibers therein. These pellets, etc., are typically made by feeding dry bundles of fibers containing up to several thousand fibers, typically having a length of about 3 mm to about 6 or 7mm or even up to about 13 mm, into a compounding or extruding machine along with one or more polymers and heating with high shear mixing to plasticize the polymer(s) and disperse the fibers therein. To achieve good feeding characteristics in the dry fiber bundles, important to the users, a substantial amount of film former or binding agent is used in the chemical sizing coated on each fiber to prevent filamentation during storage, shipment and handling. Filamentation is the breaking down of the bundles resulting in excessive small bundles and individual fibers in the product, the presence of which causes bridging in the feeding bin cones, and other fiber handling equipment resulting costly scrap and downtime.

Fiber products used to make FRP have a sizing coating on the fibers. These sizings are known and normally contain a coupling agent such as one or more silanes, one or more lubricants and one or more film formers or binders, and can contain other ingredients such as dispersants, fillers, stabilizers and others. The sizings are normally applied as an aqueous slurry, solution or emulsion, but liquids other than water are sometimes used including a solvent for at least one of the sizing ingredients. The higher amount of bonding agent(s) used in the sizing on the fibers results in stronger fiber to fiber bonding in the bundles. This is good for fiber handling characteristics, but not good for later processing and final product characteristics. Once in the compounder and in contact with the polymer(s) it is usually desirable that the bundles separate into individual fibers and that the fibers disperse thoroughly in the polymer(s). The time and amount of mixing action to accomplish this has a practical limit, and because of the bond strength between the fibers, very high shear mixing is required to achieve a suitable degree of filamentation, fiber dispersion and wet out (coating of the fibers with the polymer or polymer mixture). This very high shear damages the surface and breaks the fibers, and also falls short of complete fiber dispersion. As a result, the reinforced plastic parts produced do not reach the potential in surface characteristics and physical properties. Most product and process development work in this area is aimed at addressing these problems and opportunities.

Potential cost reduction opportunities also exist in the chopped fiber bundle manufacturing processes. The fiber bundles are made by pulling fibers from a plurality of fiberizers while the material is in a molten or plastic state, cooling the fibers, coating the fibers with water and the chemical sizing containing one or more binding agents, gathering the fibers into strands, chopping the strands into segments of desired lengths and drying the wet chopped strands in a vibrating flatbed oven and sorting the resultant dry bundles to remove undesirable small bundles and individual fibers, lumps and fuzz clumps, a significant amount of scrap. A typical process can be seen in U. S. Patent 3,996,032. These types of processes produce chopped strand bundles having a wide range of diameters and containing a wide range of numbers of fibers, e.g. from just a few fibers to 4000 or more fibers per segment. The binding agents in the sizing are expensive and the significant amount of undesirable material removed during and after drying the bundles is costly scrap. Many dry chopped strand products have been produced with the above-described processes and used in making fiber reinforced products of a wide variety.

It is known that using longer fibers in polymers, polymer mixtures and polymer precursor mixtures produces superior properties in the molded parts and many processes have been developed to address the added problem of dispersing much longer fibers, e.g. up to at least 38 mm long fibers in the polymer or polymer mixture. However, less than the desired degree of enhanced product performance has been achieved when adding the long fibers in the traditional up-front location of the plasticizer, due to the high shear resulting in the shortening of the fibers and less than the desired degree of dispersion of the long fibers has been achieved when adding the long fibers after the high shear section of the plasticizer. This has been addressed by using two or more screw plasticizers, but these take up more space and are more expensive to purchase and operate. Some of these systems and methods are disclosed in U.S. Patent Nos. 6,676,874, 6,468,464, 6,364,518, and 6,186,769 and in EP 416,859, EP 751,828 and WO 01/54877. These limitations are slowing the rate of growth of long fiber reinforced polymer products market share in the competition with products made of metals and other short fiber materials.

### SUMMARY OF THE INVENTION

The present invention includes a system comprising a chamber containing a single screw, having multiple sections all having a common axis, the chamber having a long open port for dispersing long fibers in a relatively low density concentration into hot polymer for plasticizing and preparing long fiber reinforced polymer containing molding compounds. The invention also includes a method for making moldable mixtures using this system, and the mixtures made by the process. The moldable mixtures comprise at least one type of long fiber and at least one thermoplastic or thermosetting polymer or polymer precursor, the mixtures being suitable for forming LFRP products.

In the method long fibers, wet or dry, having lengths in the range of about 3 mm to about 100 mm, more typically about 12 mm to about 100 mm and most typically about 12 mm to about 50 mm, usually in the form of bundles and/or pellets or agglomerates containing long fibers, including regrind, recycle or reclaim, are fed into a compounder, mixer, or plasticizer downstream of a high shear zone and after the at least one polymer, polymer mixture or at least one polymer precursor is in a hot fluid or fluid state and optionally mixed with ingredients other than the long fiber. The method that comprises feeding long fibers into the system to make a moldable material for making LFRP products also comprises feeding at least one polymer or polymer precursor along with other non-long fiber additives into a heated front end of a plasticator having a high shear screw section in the front end to form a mixture, subjecting the mixture to high shear and heat to reduce the viscosity of the polymer and to homogenize the mixture, metering and feeding at least one material comprising either dry or wet long reinforcing fibers having a liquid or sizing on the surfaces of the fibers, into a second or third section of the mixer or compounder, this section having a heater and a low shear screw section, heating the long fibers to drive off any volatile liquid thereon, venting any gases generated in the low shear section of the compounder, mixer or plasticizer, and dispersing the long fibers in the homogenized mixture with the low shear screw to form the moldable mixture, the low shear section of the screw being connected to and having the same axis as the high shear section of the screw. The invention also includes LFRP parts, intermediate or finished, made by these methods and systems. In the system and method of the invention, the long fibers, wet or dry, are fed into a downstream zone and heated dispersed with low shear to separate the long fibers and surround them with polymer for protection before subjecting them to medium to high shear to finalize the dispersion of the long fibers.

By wet fibers is meant that the water, solvent or other liquid medium used to make the reinforcing fiber product is not removed or not totally removed until after the wet fiber is removed from a shipping container or package in the FRP manufacturers facility where a reinforced polymer compounding system or polymer reinforced product manufacturing system is located. By solvent is meant a non-aqueous solvent for one or more of the sizing ingredients on the surface of the fiber. By not removed or not totally removed is meant that the fiber product contains at least about 0.5 wt. percent, more typically at least about 1 wt. percent, and most preferably at least about 5 weight percent of water, solvent or processing liquid. Liquid, most often water, contents of about 2 to about 20 wt. percent, preferably about 5 to about 15 and most typically about 3 to about 13 wt. percent are used in the present invention, but the moisture content can be lower if desired or if the fiber reinforcing material has dried out in transit and storage. The wet fibers can come from the manufacturer as wet fibers, or can come in as wet roving product and be chopped into long fibers just prior to being put into the plasticator. The latter equipment for chopping roving at the plasticator site is known, e.g. see EP 416,859.

The present invention is applicable to all types of size compositions and reinforcing fiber products, including wet fibers, with or without a size coating other than a liquid. The present invention permits the use of fibers in which the size coating contains very little or no film formers or binders, greatly expediting and improving fiber dispersion rate and degree.

The invention includes a system for making a moldable material for making LFRP products comprising a feeder for feeding a polymer or a polymer precursor into a front end of a first zone of a chamber, the chamber having a single screw, which may include heaters, the screw having different sections along its length with a first section in the first zone being a high shear type screw, a heater in a front end section of the chamber to heat the polymer or polymer precursor to reduce its viscosity and to homogenize the polymer or polymer precursor and any other additives fed with the polymer or polymer precursor, a second feeder for feeding long reinforcing fibers into a second zone of the chamber, a decompression zone, the decompression zone having a heater to heat the long fibers and to drive off any volatile liquid on the surface of the fibers, a section of the screw in the second zone being a low shear type screw, optionally, one or more vents in the second zone to allow any gases generated to escape and an exit end where the long fiber/polymer or polymer precursor compound can exit the chamber and screw. The fiber feeder for feeding the long fibers into the chamber can have a heater for preheating the fibers while on a vibrating or belt conveyor. A fluid bed conveyor can also be used and the air for conveying the fibers can be heated to preheat the fibers. Regardless of the type of feeder used, the effective width of the conveying portion of the feeder that delivers the long fibers into the long port of the chamber is equal to, or at least about 25 percent of, the length of the port, more typically at least about 50 percent of the length of the port and most typically, at least about 75 percent of the length of the port. The width of the feeder conveyor can be narrower than this if it oscillates so as to have a effective width, i. e. adds long fibers over this length.

This system of the invention can be used with many types of equipment including injection molding equipment, extrusion equipment, blow molding equipment, compression molding equipment including a shot pot/accumulator system, reciprocating screw systems as well as fixed screw systems. For processing polymer or polymer precursor or a polymer mixture that is moisture sensitive, it is advisable to vent the volatiles as soon as possible in the second zone of the chamber or dry the fibers just before entry into a barrel or chamber of the mixer or compounder. A screw in the plasticator has the characteristics described above and most typically has a diameter in the range of about 60 mm to about 250 mm and the length to diameter ratio greater than 25 and most typically in the range of about 35 to about 50. Although the system includes plasticators, mixers and compounders, for purposes of describing the invention, the term plasticator will be used for simplicity.

All kinds of thermoplastic polymers and polymer precursors and mixtures thereof used in FRP systems can be used in the methods of the invention as well as at least most of the thermoset polymers used in sheet molding compounds (SMC) and bulk molding compounds (BMC). These include polyolefins like polypropylene and polyethylene, polyamides, polyesters like polybutylene terephthalate and polyethylene terephthalate, polycarbonates, acetals, styrenics like SMA, ABS, SAN, PAN and PPO, thermoplastic urethanes, liquid crystal polymers, polyimidazole, polyether sulfone, polyphenelene sulfide and others including thermoplastic precursors, reactive thermoplastics. The thermoset polymers or thermoset polymer precursors include unsaturated polyester, vinyl ester, phenolic and epoxy resins.

The invention also includes a system and method for making LFRP products from long fibers comprising at least about 0.5-1 wt. percent and up to about 15 wt. percent of a liquid, preferably water, or a solvent, and at least one polymer or polymer precursor with or without other known additives and fillers. The invention also includes FRP intermediate and finished products made by the above methods of the invention in which the liquid has been entirely or substantially removed in the process.

The invention also includes the above methods and products in which particles of recycle FRP containing long or short fibers are fed into the compounder, mixer or plasticator with or without the dry and/or wet long fiber described above, or further upstream with the polymer or polymer precursor. When the recycle or reclaim is added with the polymer or polymer precursor, the recycle fibers will be shortened, especially in the first zone, but will still act as a reinforcing filler. However, recycle or reclaim can be fed downstream before, with or after the addition of the long reinforcing fibers and doing this will reduce further damage to the recycle or reclaim fibers. In all of the methods of the invention, the long fibers are fed into the system in a low density concentration by feeding the long fibers with a wide vibrating or belt or other similar conventional feeder, but in much wider form than conventionally used with plasticizers, through a longer entry port than heretofore used. This method of adding the long fibers allows the long fibers to be dispersed into the hot polymer faster and with much less damage to the fibers than in prior art systems and methods. As a result, the resulting fiber containing polymer moldable mixture, and molded parts made therefrom, are superior in performance and fiber efficiency to prior art long fiber moldable polymer mixtures or parts made therefrom. In the invention, the long fibers are little damaged and significantly less damaged by the screw and chamber, being more rapidly coated with polymer and protected from damage by the rapid coating.

When the word "about" is used herein it is meant that the amount or condition it modifies can vary some beyond that so long as the advantages of the invention are realized. Practically, there is rarely the time or resources available to very precisely determine the limits of all the parameters of ones invention because to do would require an effort far greater than can be justified at the time the invention is being developed to a commercial reality. The skilled artisan understands this and expects that the disclosed results of the invention might extend, at least somewhat, beyond one or more of the limits disclosed. Later, having the benefit of the inventors disclosure and understanding the inventive concept and embodiments disclosed including the best mode known to the inventor, the inventor and others can, without inventive effort, explore beyond the limits disclosed to determine if the invention is realized beyond those limits and, when embodiments are found having no further unexpected characteristics, the limits of those embodiments are within the meaning of the term about as used herein. It is not difficult for the artisan or others to determine whether such an embodiment is either as expected or, because of either a break in the continuity of results or one or more features that are significantly better than those reported by the inventor, is surprising and thus an unobvious teaching leading to a further advance in the art.

### BRIEF DESCRIPTION OF THE DRAWINGS

Figure 1 is a schematic cross section of a compounder or plasticator system according to the invention.
Figure 2 is a schematic cross section of another compounder or plasticator system according to the present invention.
Figure 3 is schematic cross section of a compounder chamber and screw showing an opening through which long fiber is added and volatiles are vented.
Figure 4 is a front view of a screw for use in the polymer adding and plasticating sections of a plasticator system of the invention.
Figure 5 is a front view of a screw for use in the fiber adding section of the plasticator.
Figure 6 is a front view of a screw for use in the final section(s) of the plasticator.
Figure 7 is a front view of a screw for use in a fiber mixing section.
Figure 8 is a front view of an alternative screw design for use in the fiber mixing section.
Figure 9 is a cross sectional view of a portion of a length of an alternative screw and chamber design for use in the fiber mixing section.

### DETAILED DESCRIPTION OF PREFERRED EMBODIMENTS

Typically, the dry or wet chopped strand or dry or wet chopped fiber used in the invention will be at least 8 mm long and as long as at least about 100 mm, with a typical range being between about 8 mm and about 50 mm, most typical being in the range of about 12 mm to about 40 mm. The majority of the fibers in the chopped strands typically have diameters of from about 6 microns to about 30 microns, preferably from about 12 to about 23 microns, but other diameters are suitable for some applications as is known. Normally most of the fibers will be in a narrow fiber diameter range and length, because this is how most chopped strand products on the market are made, but this is not necessary as the lengths and fiber diameters can be tailored to meet a specific application.

The moisture or solvent content of the wet chopped fiber strand coming from the chopper varies from about 0.5 wt. percent to about 16 wt. percent, or more. The chopped fiber can loose about 2-3 percent in the handling and packaging system at the fiber manufacturing plant including through the conventional feeding equipment feeding the plasticator, compounder, injection molding machine or other FRP manufacturing system at the customers' plants. Preferably the moisture content is within the range of about 3-15 percent, and most preferably in the range of less than about 7 percent as the fiber enters the conventional FRP manufacturing equipment.

Many types of fiber can be used in the present invention including all kinds of glass fibers including E, S, C, R, and T, all kinds of ceramic fibers, all types of carbon and graphite fibers, all types of natural mineral fibers, natural organic fibers, polymer fibers and all types of metal fibers. Glass fibers and carbon fibers are most commonly used in FRP products and are preferred in this invention. Chopped glass fibers, chopped glass fiber strands and glass fiber rovings conventionally used in FRP processes are dried by the fiber manufacturer in processes such as shown in U.S. Patent Nos. 4,158,555, 4,840,755 and 5,945,134, prior to shipping to FRP customers. The glass fiber roving products used in FRP manufacturing systems are also dried prior to being shipped to the FRP customers.

Wet chopped glass fibers and wet chopped glass fiber strand products are available and are used in wet process such as wet mat machines used to make non-woven fibrous mats, stampable sheet FRP products, and gypsum wall board products. The sizing compositions on some of these products contain only one or two ingredients, e.g. U.S. Pat. No. 6,294,253. These wet products are usable in the invention as are other wet products containing more than two ingredients or different ingredients. It is preferred that the size on the fibers of both the chopped fiber products and roving products have at least one coupling agent, such as a silane, and at least one lubricant therein. The wet fiber products are usually shipped in sealed plastic bags inside a container such as a cardboard box. Conventional dried fiber products are normally stored and shipped in containers that alone would be unsuitable for shipping wet fiber. It is not critical to the products used in the present invention if they dry out partially or completely during shipment and storage, but it is necessary to protect the container from liquid in the fiber products that would cause the packaging material from loosing strength and failing due to absorption of moisture or solvent from the wet fiber. That can be done with plastic bags or plastic, wood or metal containers.

The wet roving is made in a conventional manner except the drying step, used to remove the liquid such as water or a solvent and to cure the film forming binder in the sizing on the fiber, is omitted, or greatly reduced, to leave at least 0.5, preferably at least about 2 percent liquid in the roving product. It is preferred to package and even ship the roving rolls, or roving packages with the same, or close to the same liquid content as they contain when they are removed from the roving winder on which the roving roll or roving package is formed in the fiber forming room. This liquid content, typically moisture content, is normally at least 4 wt. percent, typically at least 6 wt. percent and most typically at least 8 wt. percent and can be up to about 20 wt. percent. Also, the film former or binder ingredient(s) in the sizing composition coated on the fibers can be reduced or eliminated entirely. Products made on known roving processes can be used, such as those disclosed in U.S. Pat. Nos. 5,055,119, 5,605,757, 5,957,402, 6,349,896, 6,425,545, 6,568,623, and 6,780,468, the disclosures of which are included herein by reference.

The wet roving products used in the present invention can be packaged in plastic bags, plastic film, stretch wrap, shrink wrap or plastic containers. It is not necessary to completely cover the tops or the bottoms of the roving packages with the plastic packaging materials, but only enough to contain the roving rolls or roving packages and to prevent failure of the cardboard slip sheets or trays normally used to ship roving packages. It does not hurt the wet roving of the present invention to partially or even completely dry during storage, shipment or both.

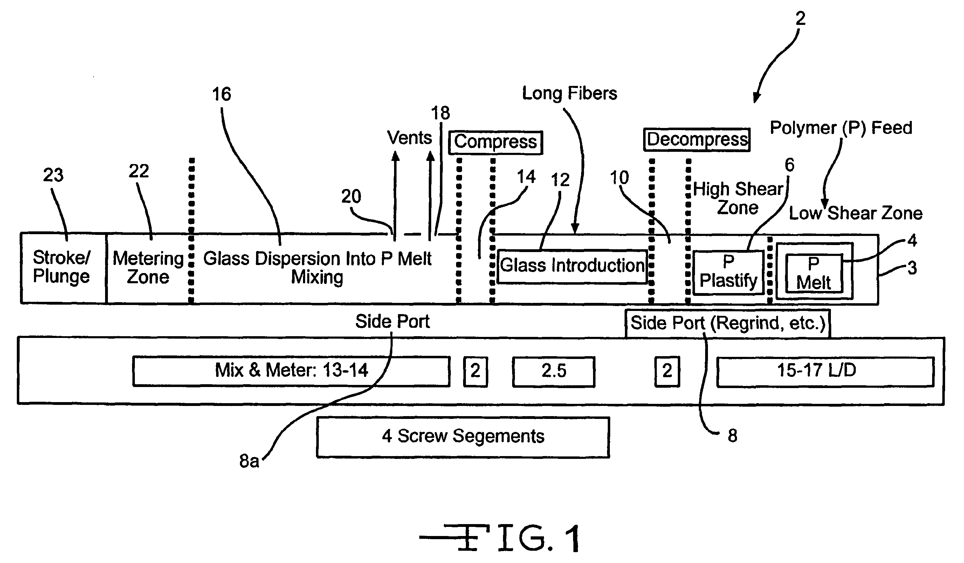

Figure 1 is a schematic of a plasticator system having a chamber 3 containing a single screw with five different zones. The screw is not shown in this schematic but can be a screw made up of sections like those shown in Figures 4-9. The first zone 4 is where a polymer, polymer precursor or combination of polymer and other non-fiber additives are fed into the chamber 3 and begins to melt and mix. The chamber 3 also has a conventional heater on the chamber and optionally in the screw in the first zone 4 and in a second zone 6, a plastifying, melting and homogenizing zone. In this embodiment the length to diameter ratio of the screw in the first two zones is most typically in the range of about 15 to about 17. The shape of the interior of the chamber 3 and that portion of the screw in the first zone 4 and the second zone 6 cooperate to produce a high shear action in the polymer or polymer mixture. The initial zones 4 and 6 use a conventional general purpose screw like that shown in Figure 4 for melting the resin without long fiber. Regrind, reclaim or recycle material, can be fed into the chamber 3 either in the first zone 4 with the polymer or can be fed into the chamber 3 through a conventional side port 8 where it will combine with the polymer and melt and homogenize, with the long fiber in zone 12 and/or through a side port 8a located further along the chamber after the introduction of the long fibers.

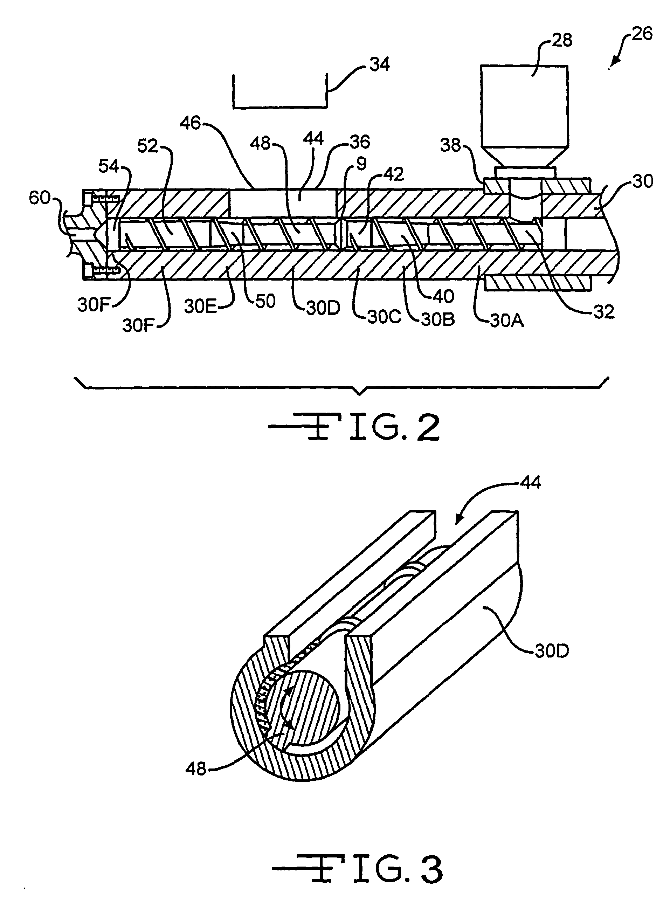

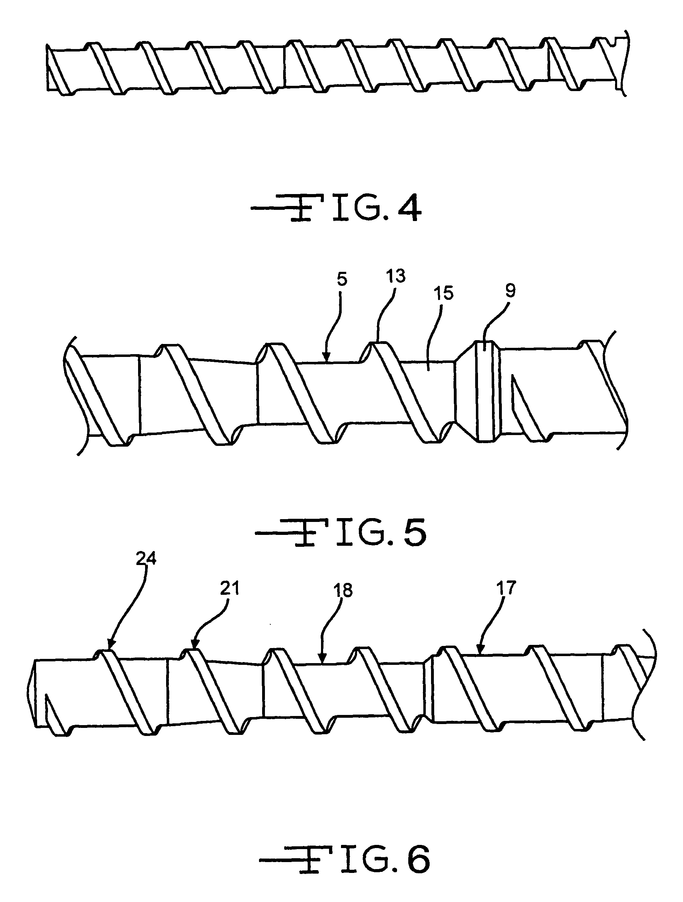

The chamber and screw at the end of the second zone 6 converts from a high shear action and a compression area at a blister 9 (Fig. 5) to a decompression or low shear design section 5 and continues this shape through a third zone 10, a decompression zone. The decompression zone 10 is accomplished by increasing the volume between two successive flights 13 on the screw and/or by reducing the diameter of the root 15 of the screw section 5. This third zone 10 can be very short having a length to diameter ratio of typically about 2 or less. The low shear design of the screw 5 continues through a fourth zone 12 where long reinforcing fibers, wet or dry, are metered into the chamber 3. The screw is only partially filled in this zone. Any volatiles generated by the fiber contacting the hot polymer are largely vented through the large port (see 44 in Figures 2 and 3) in this zone and/or by one or more additional vents further downstream. Regrind, recycle or reclaim material can also be added in the fourth zone 12.

The size of the one or more ports 44 is larger than prior art ports, typically side ports, for adding fiber to the plasticator, having a width of at least about one-half the screw diameter and a length of at least about twice the screw diameter. A typical port for a screw having a diameter of about 180 mm would have a length in the range of about 400-500 mm and a width in the range of about 100 mm. This fourth zone 12 also has chamber heaters and optionally screw heaters to more quickly heat the long reinforcing fibers to drive off any volatile liquid on the fibers and to heat the fibers to the desired temperature of the polymer or polymer mixture. At the end of the fourth zone 12, the chamber 3 and screw cooperate to produce a compression action and enter a compression zone, a fifth zone 14 having a UD ratio typically of about 2 +/- 1.

To enhance the rate of fiber dispersion into the hot polymer or hot polymer mixture, it is a feature of the invention to add the fiber in a low density, dispersed manner similar to hand sprinkling the long fibers into the port 44 so they are not in clumps of fiber or fiber strands when they contact the hot material in the chamber
30 D. This can be achieved in numerous ways. One method is to feed the long fibers using a Brabender special fiber feeder or similar feeding equipment having a vibrating tray or a conveyor having a width almost as long as the length of the port 44. The vibrating tray could also be oscillated if desired to also distribute the long fiber over the width of the port 44. Another manner of accomplishing the desired distribution is to chop rovings using a roving gun while using a robot or traversing mechanism to move the gun back and forth along the length of the port 44, or to mount the roving gun at a location such that the array of chopped rovings, wet or dry, fills or almost fills the area of the port 44. Another manner is to chop rovings, or feed long fiber, onto the full width of a belt conveyor, the width being slightly less than the length of the port 44, with the belt conveyor delivering the fiber to the port 44. The belt conveyor can also be oscillated back and forth to cover the width of the port 44 if desired. Typically the fiber feed rate is sufficient to produce a long fiber content in the final mixture or product in the range of about 20-40 weight percent. Dispersing the fiber over the full length of the port 44 is usually most desired, but especially when the fiber content of the compound is low, the full length will not be necessary. In any case the long fiber should be added over at least about the length that will disperse the long fiber without significant fiber damage. In Figure 2 the port 44 is shown as one continuous long port, but two or more shorter ports having the same cumulative effective length is also suitable, but may make the plasticator longer than necessary.

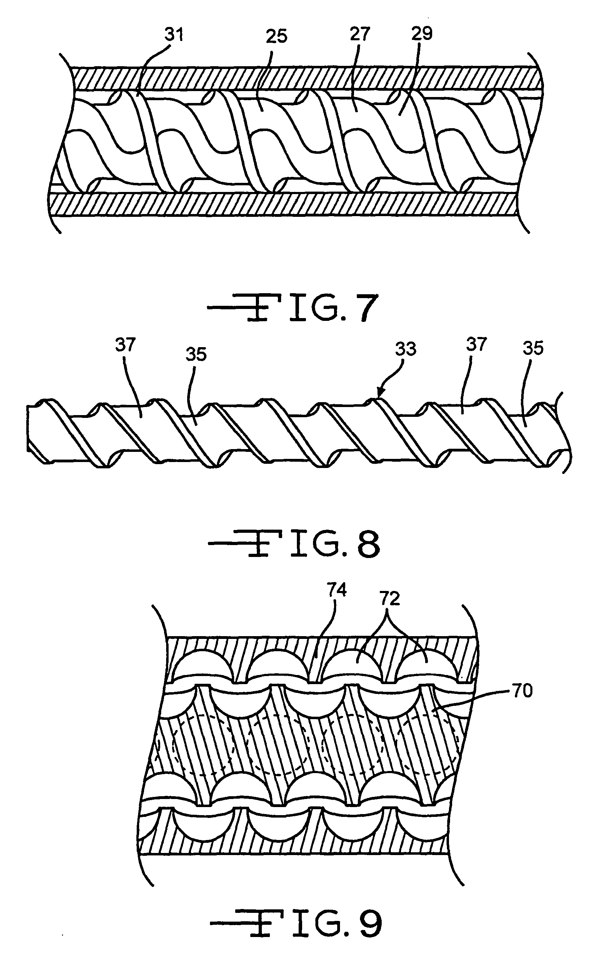

The fifth zone 14 is a compression zone and is short, having a length to diameter ratio like that of the third zone 10. The system then has a sixth zone 16 for dispersing the long fibers in the polymer mixture, for venting gasified liquid that was on the long fibers. One or more vents 18,20 are spaced in the front end-portion of the sixth zone. An example of a suitable vent would be a very short portion of a configuration like that shown in Figure 3. To enhance venting, a partial vacuum can be drawn on one or more of the vents 18,20. A screw section useful in the sixth zone is shown in Figure 6, having a metering section 17, a venting section 18 for removing volatiles, a transition or compression section 21 and a second metering section 24. By optimizing the length of the screw and the compression rate, the wet-out and fiber dispersion can be achieved with minimum fiber damage. For even better fiber dispersion and wet out the screw geometry can be optimized for additional mixing. This can be accomplished by using a distributive or dispersive mixing screw design in the sixth zone 16 for part of the screw. A distributive mixing design is preferred because it produces less damage to the long reinforcing fibers, but some dispersive mixing can be used. To achieve dispersive mixing, the hot mixture is divided into multiple channels and then recombined. A possible design for dispersive mixing is shown in Figure 9 where a screw 70 forces the polymer mixture in a serpentine path into and out of depressions 72 in a chamber 74. Distributive mixing is typically obtained by passing over a barrier. Two screw designs having barrier geometry are shown in Figures 7 and 8. In Figure 7, a screw 25 has two serpentine shaped roots 27,29 of different diameters between the flights 31. The screw 33 shown in Figure 8 has alternating roots of different diameters 35,37. The sixth zone 16 typically has an UD ratio of as little as about 8, is typically about13.5 and, depending on the number of vents and the existence of side ports for regrind, the UD ratio can be significantly higher than about 13.5.

By the end of the sixth zone 16, the fibers have been thoroughly dispersed in the polymer mixture, and without breaking the fibers down significantly as in prior art single screw plasticator systems. The resultant mixture at the end of the sixth zone 16 is a moldable compound containing long reinforcing fibers and is then pushed, with the screw, into a seventh zone 22, a metering zone to be metered continuously or periodically into a molding operation or as a column or thick sheet to be cut to lengths and fed to a molding operation as is well known. The length to diameter ratio of the seventh zone 22 being that which is conventional. The hot mixture can be injected into a tool by attaching the system of the invention to a conventional injection molding system. Also, a shot-pot or accumulator can be used in a known manner for preparing a charge for transferring into a part mold. A conventional and optional stroke/plunge zone 23 is used only with reciprocating screw systems and usually is located on the feed end of the screw. In all cases the hot mixture is molded, cooled in the mold to some extent and de-molded as a desired shape. The overall length to diameter ratio of the screw through the metering zone in the plasticator system of the invention is longer than those heretofore, being at least about 27 or 30, more typically at least about 34 and most typically at least about 36, such as 37 or higher.

Instead of discontinuous multiple parts, the hot polymer/long fiber mixture can be extruded through a shaped die as a desired profile, cooled and then cut into desired lengths and cooled. Also, other forming processes such as blow molding can be used with the invention providing the molding material. The process and system of the invention is also useful in the manufacture of thermosetting polymer mixtures.

Figure 2 shows another embodiment of the system in cross section. This plasticator system 26 comprising a feeder/metering device 28 for at least one polymer or polymer precursor with optional additives other than long fiber, a chamber 30, a screw 32 and a feeder/metering device 34 in the chamber 32 for long reinforcing fibers. The plasticator system 26 can also optionally include one or more vents 36 to exhaust gases coming from the fibers or polymer/polymer precursor. The chamber 30 and the screw 32 comprise three or four zones and are designed to cooperate to perform different actions on the polymer, long fiber and/or polymer mixture in each zone. A first zone 38 comprises a heater on or in the chamber or screw or both to heat and melt the polymer or polymer precursor and a medium to high shear screw/chamber design to start homogenization of the polymer. A second zone 40 continues to heat and homogenize the polymer under high shear. An optional third zone decompresses, transitions to a low shear screw section 42.

A fourth zone contains a long, wide port 44 for adding long fibers and can also acts as a vent to exhaust any volatiles present to avoid building up pressure and to remove gas bubbles from the polymer. The latter can be enhanced by actually drawing a partial vacuum on the fourth zone in a conventional manner used with clay extruders. The fourth zone of the chamber 30, 30d, can have one or more additional vents 46, such as the vent shown in Figure 3 spaced along the zone. The port 44 shown in Figure 3 comprises a long, wide opening in the top of the chamber portion 30d surrounding the low shear screw section 48. The long, wide port 44 permits the long fibers to be added over a large area, i.e. to be dispersed initially by being sprinkled in over a large area, a novel way of adding fibers to a plasticator, so that the fibers have minimum contact with one another prior to becoming coated or partially coated with the polymer. A typical port size for a chamber 30d having an interior diameter of about 180+ mm, would be a port about 400-500 mm long and about 100 mm wide.

The fourth zone also comprises a low shear screw section 48 and a heater that can be on/in the chamber section 30 d, the screw section 48 or both. The chamber section 30d and screw section 48 cooperate to heat the fibers to drive off any liquid as volatiles while gently dispersing the fibers in the polymer under low shear to protect the fibers. Once the fibers are so protected by the polymer, the polymer/long fiber mixture can then be subjected to high shear in a fifth zone 30e and a sixth zone 30f containing a transitioning screw section 50 in the fifth zone 30e and a medium or high shear screw section 52 to finalize the dispersion of the long fibers. Once the long fibers are substantially coated with the polymer or wetted out, they can then be subjected to higher shear without breaking down the long fibers. A final seventh zone 30g serves as a metering zone for the polymer mixture or compound utilizing a metering screw section 54. The chamber 30 also comprises an exit 60 for the mixture or compound to link up directly or indirectly in a known manner with an injection mold assembly, a blow molding assembly, a compression molding press, or a packaging machine for packaging charges of molding compound for shipment to molders located remotely.

Also, the system and method of the invention can be used with thermosetting polymers or polymer systems in which case the barrel or chamber need not be heated or not heated to as high a temperature to avoid premature cross linking of the polymer(s).

Different embodiments employing the concept and teachings of the invention will be apparent and obvious to those of ordinary skill in this art and these embodiments are likewise intended to be within the scope of the claims. The inventor does not intend to abandon any disclosed inventions that are reasonably disclosed but do not appear to be literally claimed below, but rather intends those embodiments to be included in the broad claims either literally or as equivalents to the embodiments that are literally included.

## Claims

1. A system for preparing a long fiber containing polymer or polymer precursor moldable mixture comprising a chamber containing a single screw, the chamber and screw having at least three zones, a first zone for receiving, heating, melting and mixing one or more polymers or polymer precursors under medium to high shear, a second zone containing one or more sections of low shear screw and chamber for receiving, heating and dispersing the long fibers in said polymer or polymer mixture, the chamber in the second zone containing one or more entry ports for adding the long fibers, an effective cumulative length of the port or ports being sufficient to allow the long fibers to be added in a low density concentration that will cause the long fibers to quickly disperse in, and be coated with, the polymer or polymer precursor to prevent significant damage to the long fiber, a third zone for final dispersion of the long fibers in the heated polymer, the screw section in the third zone being a low to high shear screw, and a fourth zone for metering the moldable mixture through an exit in the plasticator, all of the screw sections being connected and having a single axis.

2. The system of claim 1 further comprising one or more vents in the second zone.

3. The system of claim 1 further comprising one or more vents in the third zone.

4. The system of claim 2 further comprising one or more vents in the third zone.

5. The system of claim 1 wherein the cumulative effective length of the one or more ports is at least about two times the diameter of the screw.

6. The system of claim 3 wherein the cumulative effective length of the one or more ports is at least about two times the diameter of the screw.

7. The system of claim 1 further comprising one or more sideports for the addition of one or more other ingredients including regrind or scrap.

8. The system of claim 3 further comprising one or more sideports for the addition of one or more other ingredients including regrind or scrap.

9. The system of claim 5 further comprising one or more sideports for the addition of one or more other ingredients including regrind or scrap.

10. The system of claim 1 wherein the system is part of a molding system selected from a group consisting of an injection molding system, a bulk molding system, a sheet molding system, a blow molding system, a profile extrusion molding system, a reciprocating screw molding system and a compression molding system.

11. The system of claim 3 wherein the system is part of a molding system selected from a group consisting of an injection molding system, a bulk molding system, a sheet molding system, a blow molding system, a profile extrusion molding system, a reciprocating screw molding system and a compression molding system.

12. The system of claim 5 wherein the system is part of a molding system selected from a group consisting of an injection molding system, a bulk molding system, a sheet molding system, a blow molding system, a profile extrusion molding system, a reciprocating screw molding system and a compression molding system.

13. The system of claim 7 wherein the system is part of a molding system selected from a group consisting of an injection molding system, a bulk molding system, a sheet molding system, a blow molding system, a profile extrusion molding system, a reciprocating screw molding system and a compression molding system.

14. The system of claim 9 wherein the system is part of a molding system selected from a group consisting of an injection molding system, a bulk molding system, a sheet molding system, a blow molding system, a profile extrusion molding system, a reciprocating screw molding system and a compression molding system.

15. The system of claim 1 further comprising a feeder for continuously conveying the long fibers to the one or more ports in a form of a low density concentration.

16. The system of claim 3 further comprising a feeder for continuously conveying the long fibers to the one or more ports in a form of a low density concentration.

17. The system of claim 5 further comprising a feeder for continuously conveying the long fibers to the one or more ports in a form of a low density concentration.

18. The system of claim 7 further comprising a feeder for continuously conveying the long fibers to the one or more ports in a form of a low density concentration.

19. The system of claim 9 further comprising a feeder for continuously conveying the long fibers to the one or more ports in a form of a low density concentration.

20. The system of claim 10 further comprising a feeder for continuously conveying the long fibers to the one or more ports in a form of a low density concentration.

21. The system of claim 12 further comprising a feeder for continuously conveying the long fibers to the one or more ports in a form of a low density concentration.

22. A system for preparing a long fiber containing polymer or polymer precursor moldable mixture comprising a chamber containing a single screw, the chamber and screw having at least three zones, the first zone for receiving, heating, melting and mixing one or more polymers or polymer precursors under medium to high shear, the second zone being for receiving, heating and dispersing long fibers in the hot homogenized polymer mixture, the fibers being received through one or more ports having an effective cumulative length to allow the long fibers to be added in a low density concentration, the low density concentration permitting the long fibers to be quickly coated with the polymer or polymer precursor to avoid significant damage to the long fibers, the long fibers being subjected to low shear in the second zone, a third zone for final dispersion of the long fibers in the heated polymer, the screw section in the third zone being a low to high shear screw, and a fourth zone for metering the moldable mixture through an exit in the plasticator, all of the screw sections being connected and having a single axis, the plasticator having a length to diameter, UD, ratio of at least about 27.

23. The system of claim 22 wherein the UD ratio is at least about 30.

24. The system of claim 22 wherein the UD ratio is at least about 34.

25. A method of preparing a long fiber containing polymer or polymer precursor moldable mixture in a plasticator comprising a single screw comprising feeding at least one polymer or polymer precursor into a heated first zone of a placticator having a medium to high shear screw section to melt and form a mixture, subjecting the mixture to high shear and heat to reduce the viscosity of the polymer and to homogenize the mixture, feeding dry or wet long reinforcing fibers and metering said fibers into a second or a third zone of the plasticator, the second zone or the third zone being a decompressed zone having and a low shear screw section, feeding the long fibers into one or more ports in the second zone or the third zone in a low density concentration such that the long fibers are dispersed and coated with the polymer or polymer precursor to prevent significant damage to the fibers, heating the long fibers to drive off any volatile liquid thereon, venting any gases generated in the low shear section of the plasticator, and dispersing the long fibers in the homogenized polymer mixture to form the moldable mixture, the low shear section of the screw being connected to and having the same axis as the high shear section of the screw.

26. The method of claim 25 wherein the long fibers are fed into the one or more ports using a feeder conveyor that maintains the long fibers in a low density concentration.

27. The method of claim 26 wherein the long fibers are heated during conveying on the feeder conveyor.

28. The method of claim 25 wherein the long fibers are fed into chamber through the one or more ports over an effective cumulative length that is at least twice the diameter of the screw in that zone.

29. The method of claim 26 wherein the long fibers are fed into chamber through the one or more ports over an effective cumulative length that is at least twice the diameter of the screw in that zone.

30. The method of claim 25 wherein the UD ratio of the single screw is at least about 30.

31. The method of claim 26 wherein the UD ratio of the single screw is at least about 30.

32. The method of claim 28 wherein the UD ratio of the single screw is at least about 30.

33. A moldable polymer or polymer precursor mixture containing long fiber reinforcements made by the method of claim 25.

34. Semi-finished sheets of a moldable polymer or polymer precursor mixture containing long fiber reinforcements made by the method of claim 25.

35. Molded parts made from a moldable polymer or polymer precursor mixture containing long fiber reinforcements made by the method of claim 25.

36. A moldable polymer or polymer precursor mixture containing long fiber reinforcements made by the method of claim 31.

37. Semi-finished sheets of a moldable polymer or polymer precursor mixture containing long fiber reinforcements made by the method of claim 31.

38. Molded parts made from a moldable polymer or polymer precursor mixture containing long fiber reinforcements made by the method of claim 31.
